# EUROPÄISCHE PATENTSCHRIFT

(11) **EP 1 026 027 B1**
(45) Veröffentlichungstag und Bekanntmachung des Hinweises auf die Patenterteilung: **24.03.2004**
(21) Anmeldenummer: 99124540.8
(22) Anmeldetag: 09.12.1999
(51) Int. Cl.: B60N 2/02, B60N 2/06

(54) **Elektrischer Sitzversteller**
Electrical seat adjuster
Dispositif électrique de réglage de siège

(30) Priorität: 02.02.1999 DE 19904079
(43) Veröffentlichungstag der Anmeldung: 09.08.2000
(73) Patentinhaber: ISE Innomotive Systems Europe GmbH, 51702 Bergneustadt (DE)
(72) Erfinder: Janisch, Mirko, Dipl.-Ing., 53721 Siegburg (DE); Liesaus, Frank, Dipl.-Ing., 51702 Bergneustadt (DE); Kumor, Gyula, Dipl.-Ing., 1164 Budapest (HU); Lang, Jozsef, Dipl.-Ing., 1131 Budapest (HU)
(74) Vertreter: Fuchs Mehler Weiss & Fritzsche

(56) Entgegenhaltungen:
- EP-A- 0 112 140
- EP-A- 0 552 464
- WO-A-97/16326
- FR-A- 2 457 196
- US-A- 5 292 164

## Beschreibung

Die Erfindung bezieht sich auf einen elektrischen Sitzversteller für ein horizontales Verstellen eines Kraftfahrzeugsitzes gemäß dem Oberbegriff des Anspruchs 1 (s. zum Beispiel WO-A-97/16326).

Derartige elektrische Sitzversteller weisen typischerweise ein erstes, an dem Fahrzeugsitz befestigtes, parallel zueinander angeordnetes Schienenpaar auf, mit der Fahrzeugsitz auf einem zweiten, fahrzeugfest angebrachten, parallel zueinander angeordneten Schienenpaar, verschiebbar halterbar ist. Sie besitzen ferner eine Antriebsanordnung bestehend aus einem Elektromotor mit zwei gegenüberliegend senkrecht zur Erstreckung der Schienen angebrachten Antriebswellen, an denen jeweils ein Winkelgetriebe mit einer parallel zu der Erstreckung der Schienen verlaufenden Gewindespindel angebracht ist, sowie eine Antriebs-Mutter für jede Gewindespindel, die jeweils an einem Mutterhalter mechanisch aufgenommen ist. Dabei ist die Elektromotor/Getriebeanordnung an einem Schienenpaar, dieses überbrückend, und der Mutterhalter jeweils an einer Schiene des anderen Schienenpaares fest angebracht.

Bei Betätigung des Motors werden die Gewindespindeln verdreht und es tritt eine lineare Relativbewegung zwischen den Mutterhaltern und der Elektromotor/Getriebeanordnung und damit zwischen den beiden Schienenpaaren auf.

Bei dem Zusammenbau der elektrischen Sitzversteller entstehen fertigungsbedingte Abweichungen von dem Sollzustand, aus denen wiederum Fluchtungsfehler in den unterschiedlichsten Achsenrichtungen resultieren, d.h. der notwendige Parallellauf zwischen Gewindespindeln und Mutterhaltern ist beeinträchtigt mit der Konsequenz eines zum Teil schwergängigen und mit starken Geräuschen begleiteten Laufes. Diese Fluchtungsfehler können bei dem derzeitigen Stand der Technik nur in einer Richtung ausgeglichen werden. Gemäß der Fig. 15 erfolgt dieses Ausrichten um eine Achse dadurch, daß die Antriebs-Mutter 14 in einem Mutterkäfig 16 mittels an ihren Seiten angebrachten Zapfen um die Y-Achse verdrehbar aufgenommen ist. Der Mutterkäfig 16 ist dabei an dem Mutterhalter 12 befestigt, der wiederum mit der ortsfesten Schiene 1 verbunden ist.

Der Erfindung liegt die Aufgabe zugrunde, den eingangs bezeichneten elektrischen Sitzversteller so auszubilden, daß Fluchtungsfehler zwischen Antriebs-Muttern und der Gewindespindeln in jeder beliebigen Achsenrichtung ausgleichbar sind.

Die Lösung dieser Aufgabe gelingt gemäß der Erfindung durch die Kennzeichnenden Merkmale des Anspruchs 1.

Durch die kardanische d. h. kugelgelenkige Aufhängung der kugelförmigen Antriebs-Muttern in dem jeweiligen zugehörigen Mutterhalter können fertigungsbedingte Fluchtungsfehler um jede beliebige Achsenrichtung ausgeglichen werden. Dadurch ist ein leichtgängiger und geräuscharmer Lauf zwischen Gewindespindel und Mutterhalter gewährleistet.

Gemäß der Erfindung ist eine besonders vorteilhafte Lagerung der Antriebs-Muttern möglich, indem die Antriebs-Muttern zumindest im Lagerbereich kugelig ausgebildet sind und jeweils verdrehgesichert in einem Mutterkäfig aufgenommen sind, der jeweils mit einem flachen metallischen Formteil des Mutterhalters, das zur Befestigung an der zugehörigen Schiene dient, verbunden ist.

Gemäß einer weiteren Ausgestaltung der Erfindung läßt sich dabei das Geräuschverhalten noch verbessern, wenn der Mutterkäfig jeweils durch ein Kunststoff gebildet ist, das eine kugelige Ausnehmung zur spielfreien Aufnahme der kugelig ausgebildeten Antriebs-Mutter aufweist. Der KunststoffMutterkäfig dämpft die Geräusche zusätzlich.

Die verdrehbegrenzte bzw. verdrehgesicherte Aufnahme der Antriebs-Mutter in dem Kunststoff-Mutterkäfig läßt sich auf einfache Weise dadurch realisieren, daß die Antriebs-Mutter einen Anschlagzapfen und der Kunststoff-Mutterkäfig eine zugehörige Anschlagkulisse aufweist, die so ausgebildet ist, daß die Bewegung des Anschlagzapfens auf einen gewünschten Bereich begrenzt ist.

Das Material der Antriebs-Mutter kann ein Metall aber auch ein Kunststoff sein. Eine metallische Antriebs-Mutter ist einmal verschleißfester und läßt sich auch einfacher bei einem nachfolgenden Spritzgießen des Kunststoff-Mutterkäfigs handhaben. Eine Kunststoff-Antriebs-Mutter wiederum gewährleistet einen geräuschloseren Lauf.

Eine einfache und dennoch sichere Verbindung des flachen metallischen Formteils des Mutterhalters mit dem Kunststoff-Mutterkäfig läßt sich erzielen, wenn das flache metallische Formteil Fortsätze besitzt, mit denen es in dem Kunststoff-Mutterkäfig verankert ist.

Die vorstehenden Ausführungen lassen erkennen, daß die beschriebene Ausführungsform des Mutterhalters eine einfache Konstruktion besitzt und relativ einfach, insbesondere im Wege des Spritzgießens, herzustellen ist, was sich auch wirtschaftlich hinsichtlich der Kostensituation auswirkt.

Gemäß einer weiteren Ausführungsform des erfindungsgemäßen Mutterhalters kann die Anordnung auch so getroffen sein, daß anstelle eines die Antriebs-Mutter allseits aufnehmenden Kunststoff-Mutterkäfigs der Mutterkäfig jeweils durch ein kastenförmiges, metallisches Formteil gebildet ist, welches mit dem flachen metallischen Formteil des Mutterhalters, das zur Befestigung an der zugehörigen Schiene dient, verbunden ist, und welches jeweils die Antriebs-Mutter, die einen ohrmuschelartigen Fortsatz zur Verdrehsicherung besitzt, und die in zwei kugelige Ausnehmungen aufweisende Pfannen, die eine flache Außenseite besitzen, eingebettet ist, aufnimmt, wobei vorzugsweise das kastenförmige Formteil einstückig mit dem flachen Formteil verbunden ist und durch Aufbiegen eines flachen Blechteiles gebildet ist.

Bei einer derartigen Ausführungsform beschränkt sich die Herstellung des Mutterhalters auf eine Metallverarbeitung; die Antriebs-Mutter und die halternden Pfannen, die vorzugsweise aus Kunststoff bestehen, werden als Teile beigestellt. Darüber hinaus kann mit großem Vorteil durch eine Verschiebung des ohrmuschelartigen Fortsatzes in dem Mutterkäfig quer zur Gewindespindelachse ein Achsenversatz zwischen Antriebs-Mutter und Gewindespindel ausgeglichen werden.

Gemäß einer anderen Weiterbildung der Erfindung kann die Anordnung auch so getroffen werden, daß der Mutterkäfig aus zwei miteinander befestigten Gehäuseteilen besteht, die jeweils eine halbkugelige Ausformung zur Aufnahme der kugeligen Antriebsmutter besitzen, wobei die Antriebs-Mutter einen Fortsatz besitzt, der zur Verdrehsicherung in einer Anschlagkulisse zwischen beiden Gehäuseteilen aufgenommen ist und wobei das eine Gehäuseteil mit dem flachen metallischen Formteil des Mutterhalters, das zur Befestigung an der zugehörigen Schiene dient, verbunden ist, wobei vorzugsweise beide Gehäuseteile aus einem Blechteil gebildet sind, in das jeweils die halbkugelige Ausformung eingedrückt ist, wobei an einem Gehäuseteil einstückig das flache Formteil ausgeformt ist, wobei vorzugsweise beide Gehäuseteile durch Nieten miteinander verbunden sind.

Auch diese Ausführungsform erlaubt eine Herstellung des Mutterhalters mit bekannten Methoden der Blechverarbeitung, der dadurch wirtschaftlich produzierbar ist.

Gemäß einer weiteren Ausgestaltung der Erfindung ist eine Alternative zu dem vorerwähnten Kunststoff-Mutterkäfig gegeben, indem der Mutterkäfig aus zwei miteinander verbundenen Kunststoff-Halb-Schalen besteht, die jeweils eine innere halbkugelige Ausnehmung zur Aufnahme der kugeligen Antriebs-Mutter besitzen, wobei die Antriebs-Mutter einen Fortsatz aufweist, der verdrehsicher in einer dazu komplementären Ausnehmung in einer der beiden Halb-Schalen aufgenommen ist, und die jeweils an den Seiten beabstandet angeformte Klemmstege zur Befestigung der Halb-Schalen mit der eingebetteten Antriebs-Mutter in einer U-förmigen Aufnahme besitzen, wobei die Aufnahme mit dem flachen metallischen Formteil, das zur Befestigung an der jeweiligen Schiene dient, verbunden ist.

Wenn dabei die Anordnung so getroffen ist, daß die Klemmstege jeweils über angeformte halbrunde Fortsätze mit den Seitenwänden der Halb-Schalen verbunden sind und in den Schenkeln der Aufnahme dazu komplementäre Ausnehmungen vorgesehen sind, wobei der Durchmesser der Ausnehmung in der Aufnahme zur Vorgabe eines ein Versatz ausgleichendes Spiel etwas größer als der Durchmesser der halbrunden Fortsätze ist, ist ebenfalls ein Versatz zwischen Antriebsmutter und Gewindespindel kompensierbar.

Die vorstehenden Ausführungen zeigen, daß dem Fachmann eine Reihe von Möglichkeiten zur Realisierung des erfindungsgemäßen Mutterhalters zur Verfügung stehen, von denen er je nach den fertigungstechnischen Gegebenheiten und eventuellen Kundenwünschen die beste Variante auswählen wird.

Weitere Vorteile und ausgestaltende Merkmale der Erfindung ergeben sich anhand der Beschreibung eines in den Zeichnungen dargestellten Ausführungsbeispieles.

Es zeigen:
- Fig. 1: in einer schematischen Darstellung eine Draufsicht auf die wesentlichen Antriebselemente eines Sitzverstellers für Fahrzeugsitze,
- Fig. 2: eine Draufsicht auf einen gemäß einer ersten Ausführungsform der Erfindungs ausgebildeten Mutterhalter der Antriebselemente nach Fig. 1 im vergrößerten Maßstab,
- Fig. 3: eine Seitenansicht des Mutterhalters nach Fig. 2, mit Darstellung eines, eine kugelförmige Ausnehmung aufweisenden Mutterkäfigs, in dem eine kugelige Antriebs-Mutter aufgenommen ist,
- Fig. 4: eine Schnittansicht durch einen Teil des Mutterhalters nach Fig. 2 genommen entlang der Linie A-A,
- Fig. 5: eine Schnittansicht durch den Mutterkäfig und die kugelige Antriebs-Mutter nach Fig. 3 genommen entlang der Linie B-B,
- Fig. 6: in einer Explosionsdarstellung eine zweite Ausführungsform der Erfindung mit einer Aufnahme der kugeligen Antriebs-Mutter über zwei Pfannen in einem kastenförmigen Mutterkäfig,
- Fig. 7: eine Schnittansicht des Mutterkäfigs nach Fig. 6 entlang der Y-Achse,
- Fig. 8: eine Schnittansicht des Mutterkäfigs nach Fig. 6 entlang der X-Achse,
- Fig. 9: in einer Seitenansicht eine dritte Ausführungsform der Erfindung mit zwei kugelig ausgebildeten Gehäusehälten als Mutterkäfig zur Aufnahme der kugeligen Antriebs-Mutter,
- Fig. 10: eine Schnittansicht des Mutterkäfigs nach Fig. 9 entlang der Gewindespindel-Achse,
- Fig. 11: eine Schnittansicht analog Fig. 10, jedoch mit Teilschnitten und Drehungen um 90°,
- Fig. 12: in einer Explosionsdarstellung eine vierte Ausführungsform der Erfindung mit zwei Halb-Schalen zur Aufnahme der kugeligen Antriebs-Mutter,
- Fig. 13: eine U-förmige Aufnahme für die Halb-Schalen nach Fig. 12 unter Bildung des Mutterkäfigs,
- Fig. 14: der komplette Mutterhalter mit dem Mutterkäfig nach den Figuren 12 und 13, und
- Fig. 15: die Ausbildung des Mutterhalters nach dem herkömmlichen Stand der Technik.

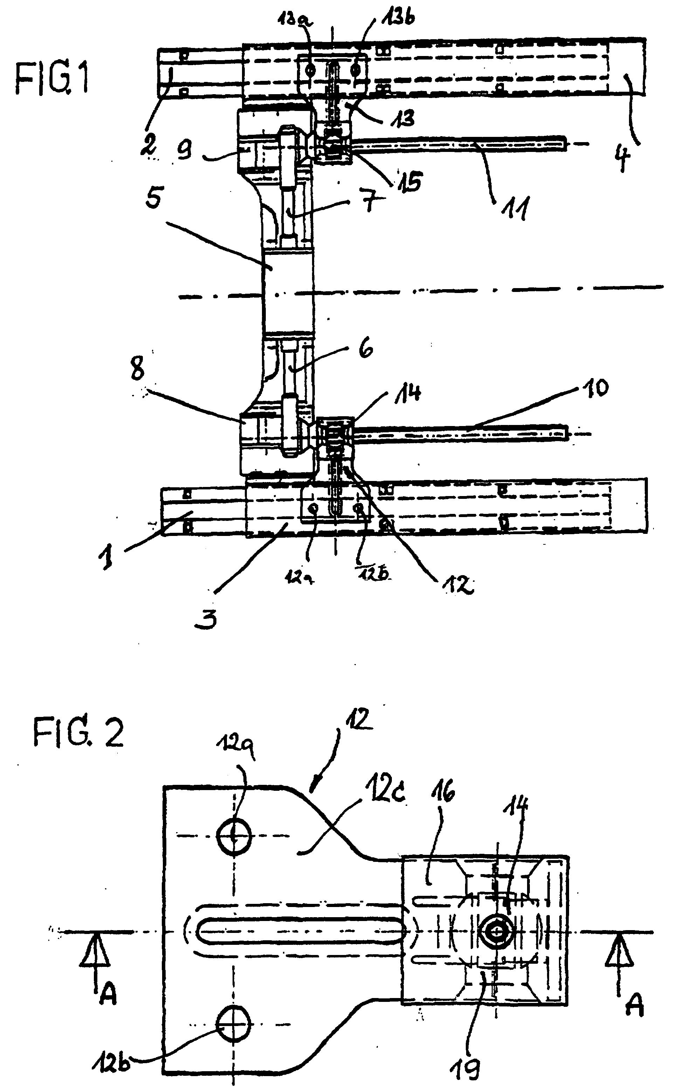

Die Fig. 1 zeigt in einer schematischen Draufsicht-Darstellung die wesentlichen Antriebselemente eines elektrischen Sitzverstellers für Kraftfahrzeugsitze. Es ist ein erstes Paar von Schienen 1, 2 die Unterschienen, vorgesehen, die parallel zueinander auf dem Fahrzeugboden befestigt sind. Auf diesen Unterschienen 1, 2 ist jeweils eine Schiene 3, 4 eines weiteren Schienenpaares, die Oberschienen, verschiebbar gehaltert. Typischerweise ist dabei der zu verstellende Fahrzeugsitz mit den Oberschienen 3, 4 verbunden. Prinzipiell kann die Anordnung auch umgekehrt getroffen sein.

Der Sitzversteller weist eine Antriebsanordnung auf, die aus einem Elektromotor 5 besteht, der zwei gegenüberliegend senkrecht zur Erstreckung der Schienen 1, 2, 3 und 4 angebrachte Antriebswellen 6, 7 aufweist, die jeweils Teil eines integrierten Winkelgetriebes 8, 9 sind, das jeweils an dem Elektromotor 5 angeflanscht ist oder integral mit ihm verbunden ist. Jedes der beiden Winkelgetriebe 8, 9 weist eine Gewindespindel 10, 11 auf, die sich parallel zu den Schienen 1 bis 4 ersrecken. Die Elektromotor/Getriebeanordnung 5 bis 11 ist dabei typischerweise fest mit dem Schienenpaar 3, 4 (Oberschiene), deren Schienen überbrückend, verbunden, d. h. sie bewegt sich typischerweise mit dem Fahrzeugsitz bei einer Verstellung der Oberschiene mit.

Die Antriebsanordnung weist ferner zwei, je einer Gewindespindel 10, 11 zugeordnete Mutterhalter 12, 13 auf, an denen jeweils eine erfindungsgemäß ausgebildete und gehalterte Antriebs-Mutter 14, 15 angebracht ist. Typischerweise sind die Mutterhalter 12, 13 über Befestigungslöcher 12a, 12b bzw. 13a, 13b fest mit der Unterschiene 1, 2 und damit fahrzeugfest verbunden, d. h. bei einer Verstellung des Sitzes bleiben die Antriebs-Muttern 14, 15 ortsfest und die Motor/Getriebeanordnung 5-9 mit den Gewindespindeln 10, 11 bewegt sich mit dem Sitz.

Die Anordnung kann, wie bereits erwähnt, auch umgekehrt getroffen sein, d.h. die Mutterhalter sind dann mit der Oberschiene und die Motor/Getriebeanordnung ist mit der Unterschiene verbunden. Es kommt letztlich auf die Relativbewegung zwischen beiden Schienenpaaren an.

Bis auf die Mutterhaltern 12, 13 besteht der Sitzversteller nach Fig. 1 aus konventionellen, bewährten Komponenten, so daß diese hier nicht näher beschrieben werden müssen. Die Erfindung ist in den Mutterhaltern 12, 13 enthalten, die je nach Ausbildung der Aufnahme der Antriebsmuttern in einem zugehörigen Mutterkäfig unterschiedlich ausgebildet sind.

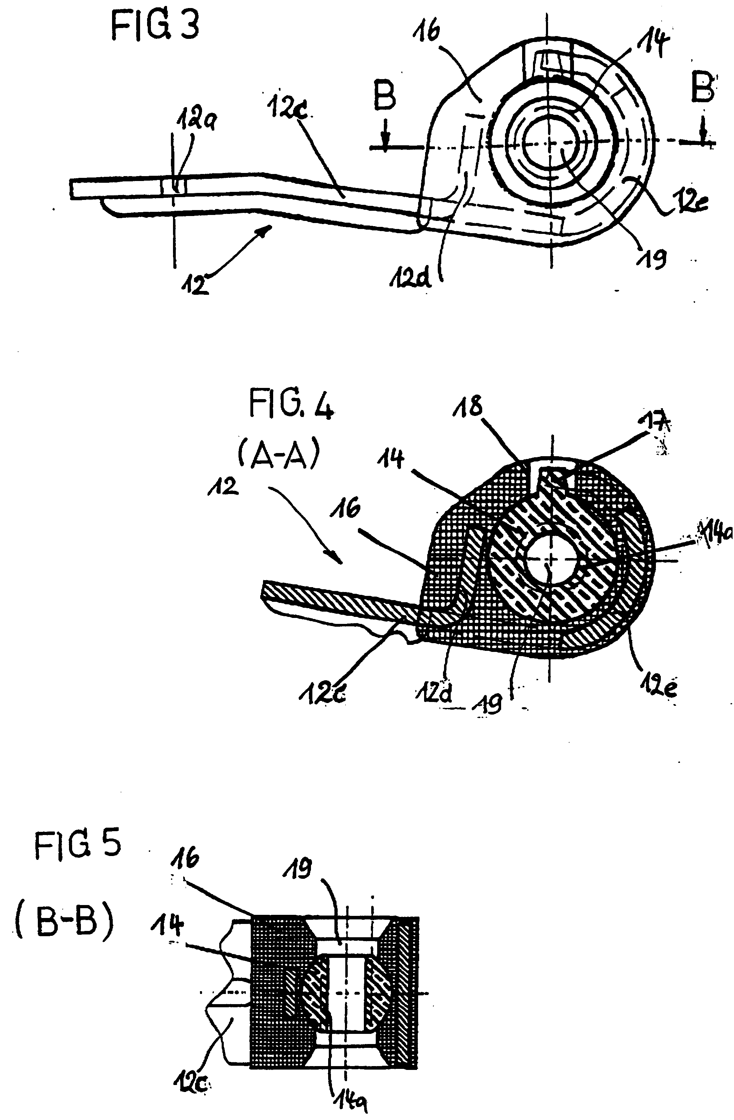

Die Fig. 2 zeigt daher in einer vergrößerten Darstellung eine Draufsicht auf den unteren Mutterhalter 12 in Fig. 1 mit einer Schnittdarstellung entlang der Linie A-A in Fig. 4. Die Fig. 3 zeigt eine Seitenansicht dieses Mutterhalters mit einer Schnittdarstellung entlang der Schnittlinie B-B in Fig. 5. Für den oberen Mutterhalter 13 gilt entsprechendes.

Der Mutterhalter 12 besteht in dieser Ausführungsform aus einem flachen, versteiften Formteil 12c aus Stahlblech oder einem anderen Metall, das mittels Fortsätzen 12d und 12e in einem Kunststoffkäfig 16 mit einer in dieser Ausführungsform kugelförmigen Ausnehmung verankert ist. In diesem Kunststoffkäfig 16 ist die Antriebs-Mutter 14, kugelig nach Art eines Kugelgelenkes ausgebildet, spielfrei beweglich aufgenommen, d. h. kardanisch gelagert. Das Material der Antriebs-Mutter kann dabei Stahl oder Kunststoff sein. Die Antriebsmutter 14 besitzt einen Anschlagzapfen 17, der mit einer komplementären Anschlagkulisse 18 in dem Mutterkäfig 16 im Wirkeingriff steht, derart, daß diese Elemente die Bewegung der Antriebs-Mutter 14 im gewünschten Bereich begrenzen und sie gleichzeitig gegen eine Verdrehung sichern. Die Antriebsmutter 14 besitzt ferner eine durchgehende Bohrung 19 mit einem Gewindeabschnitt 14 a zur Aufnahme der zugehörigen Gewindespindel 10.

Durch diese kugelgelenkartige Lagerung der Antriebs-Mutter 14 können fertigungsbedingte Ungenauigkeiten in der Parallelausrichtung der Schienen und Gewindespindeln in allen Achsrichtungen ausgeglichen werden, so daß mit einfachen Mitteln ein leichtgängiger und geräuscharmer Lauf des Spindel/Muttersystems beim Sitzversteller erzielbar ist.

Mit Vorteil ist der Mutterhalter 12/13 so ausgebildet, daß die metallische bzw. Kunststoff-Antriebs-Mutter 14/15 und das metallische Halter-Formteil 12c in eine Spritzgießform eingelegt werden und danach unter Ausbildung des Mutterkäfigs 16 mit Kunststoff umspritzt werden.

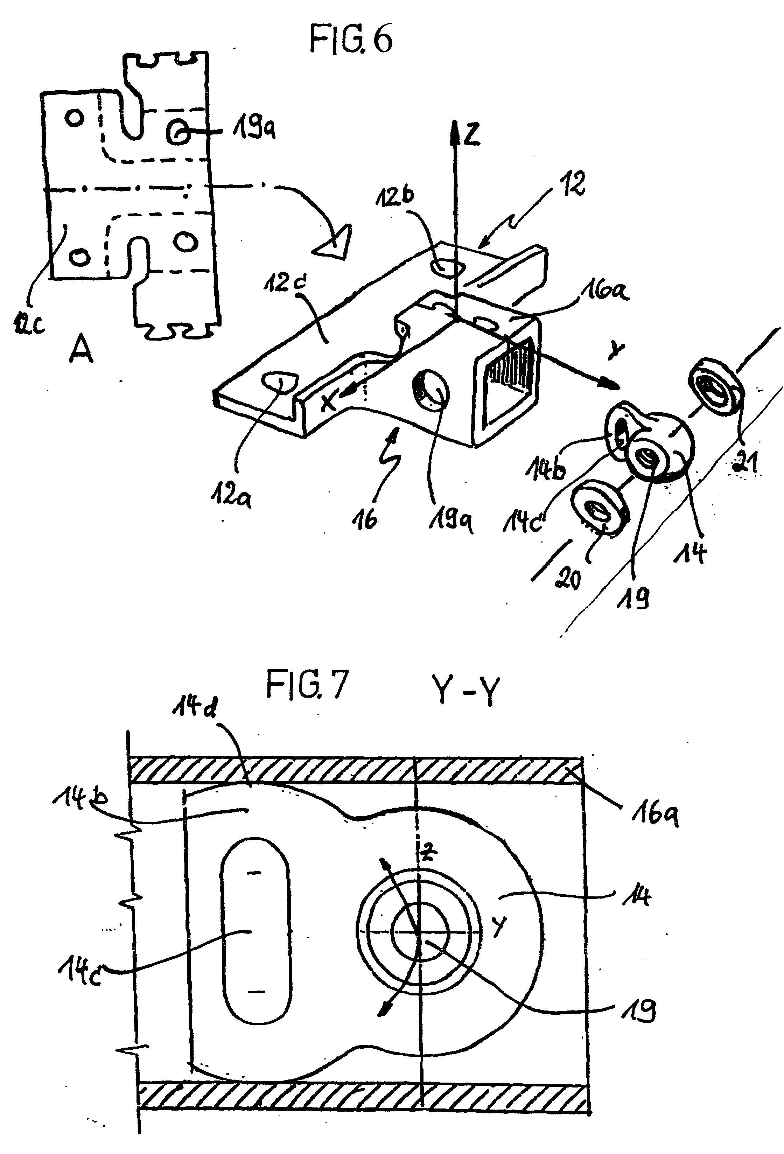

In den Figuren 6 bis 14 sind drei weitere Ausführungsformen von in Fig. 1 unteren Mutterhaltern 12 und Mutterkäfigen 16 dargestellt, wobei für funktionsgleiche Teile dieselben Bezugszeichen wie in den Figuren 1 - 5 verwendet werden, auch wenn diese Teile nicht in allen Einzelheiten miteinander identisch sind. Auch hierbei gilt für die in Fig. 1 oberen Mutterhalter entsprechendes.

Bei der zweiten Ausführungsform nach den Figuren 6 bis 8 ist der Mutterhalter 12 einstückig mit dem Mutterkäfig 16 durch Auffalten eines gestanzten Blechteiles entsprechend der Abwicklung im Figurenteil A der Fig. 6 verbunden. Das Flachstück 12c des Mutterhalters mit den Befestigungslöchern 12a und 12b ist, wie bei der ersten Ausführungsform, mit der zugehörigen ortsfesten Unterschiene verbunden. Der Mutterkäfig 16 wird durch ein kastenförmiges Gehäuse 16a mit Durchtrittsöffnungen 19a für die zugehörige Gewindespindel (nicht dargestellt) gebildet.

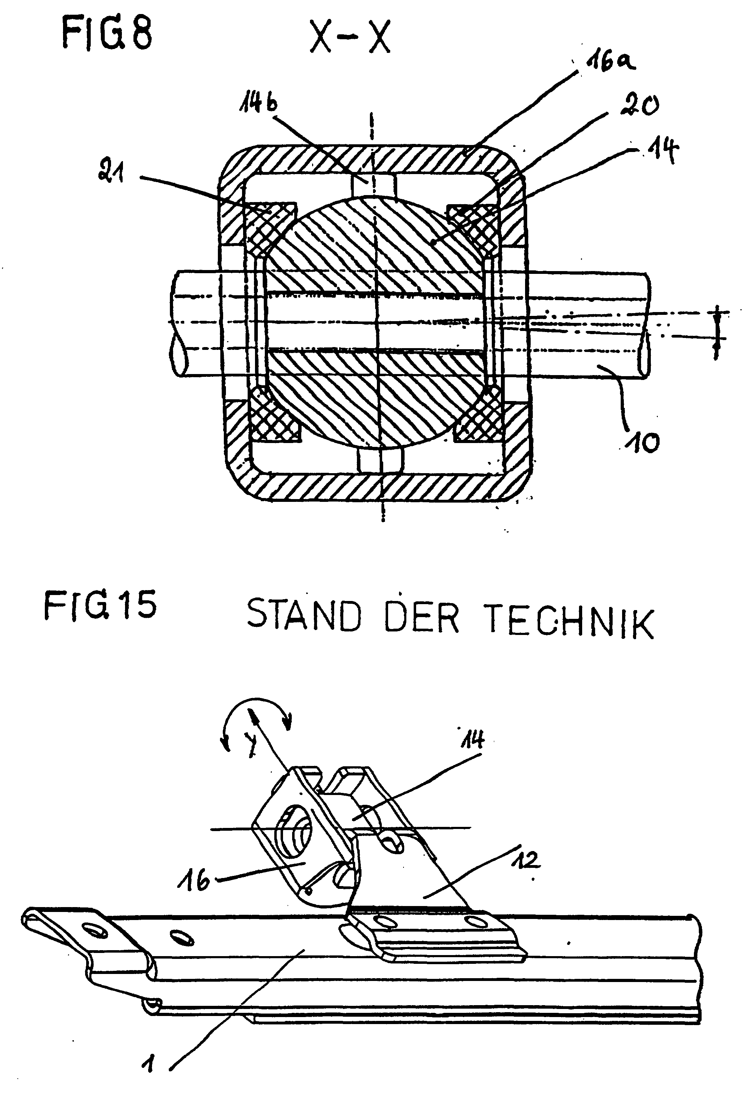

Die kugelig ausgebildete Antriebs-Mutter 14 mit abgeflachten Bereichen an dem Durchgang 19 für die Gewindespindel ist, koaxial zu dieser Durchtrittsöffnung, von zwei Lagerpfannen 20, 21 aufgenommen, die eine innere Ausnehmung entsprechend der Kontur der Antriebs-Mutter 14 im aufgenommenen Bereich haben. Sie haltern, wie insbesondere die Fig. 8 erkennen läßt, die Antriebs-Mutter 14 in dem den Mutterkäfig 16 bildenden kastenförmigen Abschnitt 16 a.

Die Antriebs-Mutter besitzt einen ohrmuschelförmigen Fortsatz 14b mit einer Ausnehmung 14c zur Materialersparnis, der, wie insbesondere die Fig. 7 erkennen läßt, der Verdrehsicherung der Antriebsmutter dient.

Bei dieser Anordnung kann nicht nur, wie in Fig. 8 durch das Winkelspiel angedeutet, eine Fehlausrichtung der Achse der Gewindespinel ausgeglichen werden, sondern auch ein Achsenversatz zwischen der Antriebs-Mutter 14 und der Getriebespindel 10 in Y-Richtung und Z-Richtung, indem sich die Antriebs-Mutter 14 mit der gekrümmten Fläche 14 d in dem kastenförmigen Abschnitt 16a des Mutterhalters in Y-Richtung und Z-Richtung verschiebt (Fig. 7).

Bei dieser zweiten Ausführungsform nach den Figuren 6 bis 8 besteht der Mutterhalter 12 mit dem Mutterkäfig 16 vorzugsweise aus einem Blechteil, wogegen die Antriebs-Mutter 14 bzw. die Lagerpfannen 20, 21 vorzugsweise aus einem Kunststoff bestehen; sie können jedoch auch, zumindest teilweise, aus einem metallischen Werkstoff bestehen.

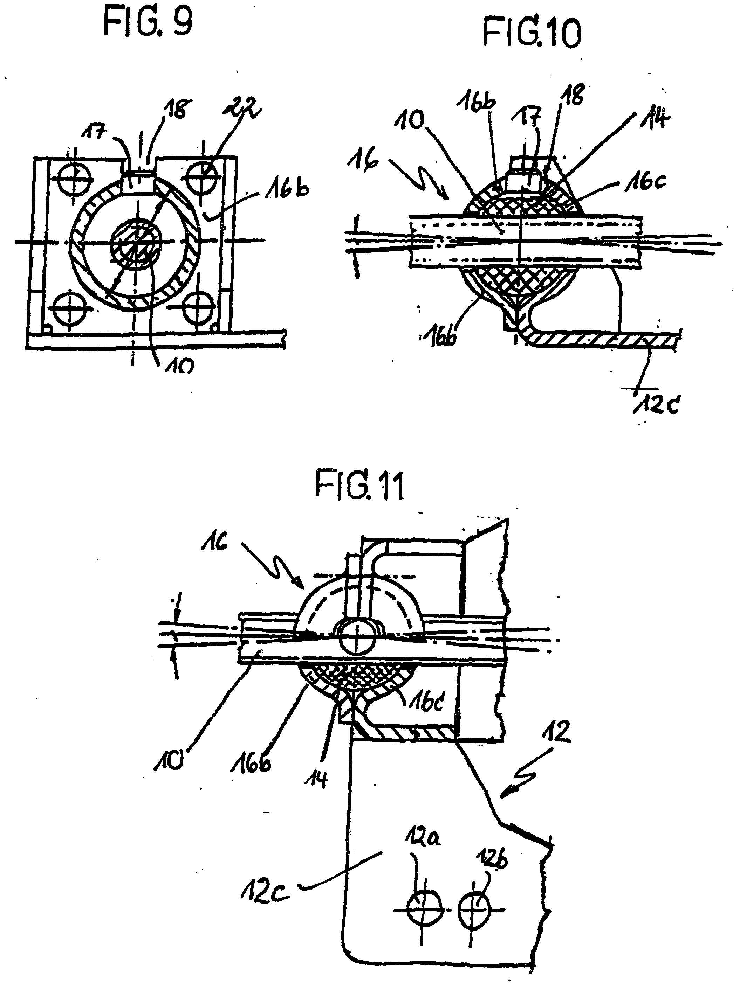

Bei der dritten Ausführungsform nach den Figuren 9 bis 11 besteht der Mutterkäfig 16 aus zwei Gehäuseteilen 16b und 16c, die jeweils halbkugelige Ausformungen zur Aufnahme der kugeligen Antriebs-Mutter 14 besitzen. Beide Gehäuseteile sind mittels Befestigungsmittel 22, vorzugsweise durch Nieten, miteinander verbunden. An dem Gehäuseteil 16c ist dabei einstückig das Flachstück 12c des Mutterhalters 12 angeformt, wobei dieses Flachstück prinzipiell auch als separates Teil mit bekannten Techniken mit dem Gehäuseteil 16c verbindbar ist.

Analog der Ausführungsform nach Fig. 4 besitzt die Antriebs-Mutter 14 zur Verdrehsicherung einen Fortsatz 17, der in einer Anschlagkulisse 18, die durch einen entsprechenden Abstand zwischen den Gehäuseteilen im oberen Teil des Mutterkäfigs gebildet wird, aufgenommen ist.

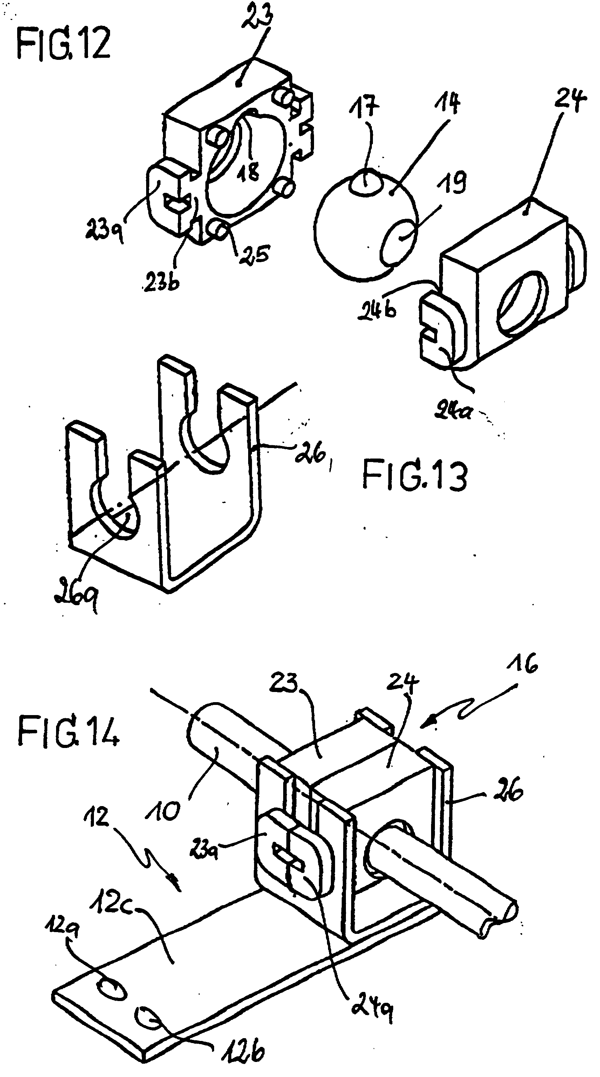

Bei der vierten Ausführungsform nach den Figuren 12 bis 14 besteht der Mutterkäfig 16 für die Antriebs-Mutter 14 aus zwei Halb-Schalen 23, 24 mit halbkugeligen Ausformungen, die über Zapfen 25 an der Halb-Schale 23 mit entsprechenden Öffnungen in der Halb-Schale 24 miteinander verbindbar sind. Die Antriebs-Mutter 14 besitzt wiederum einen Fortsatz 17, der in einer Anschlagkulisse 18 in der Halb-Schale 23 verdrehsicher aufgenommen wird.

Die beiden Halb-Schalen 23 und 24 mit der eingebetteten Antriebs-Mutter 14 werden lösbar miteinander verbunden, indem sie als Block in eine U-förmige Schadenaufnahme 26 gemäß Fig. 13 gesteckt und dort miteinander verklemmt werden. Zu diesem Zweck sind an den beiden Halb-Schalen Klemmstege 23 a und 24 a im Abstand zu den Schalenwänden angeformt, wobei zwischen der Schalenwand und dem Klemmsteg jeweils ein Ansatz 23b, 24b mit einem halbkreisförmigen Querschnitt ausgebildet ist. Der Kreisdurchmesser dieses Ansatzes ist etwas kleiner als derjenige der kreisrunden Öffnungen 26a in der Schalenaufnahme 26. Der Abstand zwischen den Klemmstegen 23a und 24a entspricht dabei der Wandstärke der Schalenaufnahme 26.

Der fertig montierte Zustand ist dabei in Fig. 14 dargestellt, einschließlich der Befestigung der Schalenaufnahme 26 auf dem Verbindungsblech 12c des Mutterhalters 12 mit üblichen Mitteln.

Bei der Ausführungsform nach den Figuren 12 bis 14 bestehen die Halb-Schalen 23 und 24 sowie die Antriebsmutter 14 vorzugsweise aus Kunststoff, wogegen die Schalenaufnahme 26 und das Verbindungsblech 12c vorzugsweise Blechteile sind.

Durch das seitliche Spiel bei der Aufnahme der Halb-Schalen 23 und 24 in der Schalenaufnahme 26 kann auch bei dieser Ausführungsform ein Achsenversatz in Y-Richtung (siehe Fig. 6) zwischen Antriebs-Mutter 14 und Gewindespindel 10 ausgeglichen werden.

## Patentansprüche

1. Elektrischer Sitzversteller für ein horizontales Verstellen eines Kraftfahrzeugsitzes, der mittels einem an ihm befestigten ersten, parallel zueinander angeordneten Schienenpaar (3, 4) auf einem fahrzeugfest angebrachten zweiten, parallel zueinander angeordneten, Schienepaar (1, 2) verschiebbar halterbar ist, mit einer Antriebsanordnung, bestehend einmal aus einem Elektromotor (5) mit zwei gegenüberliegend senkrecht zur Erstreckung der Schienen angebrachten Antriebswellen (6, 7), an denen jeweils ein Winkelgetriebe (8, 9) mit einer parallel zu der Erstreckung der Schienen verlaufenden Gewindespindel (10, 11) angebracht ist, wobei die Elektromotor/Getriebeanordnung an dem ersten Schienenpaar (3, 4), dieses überbrückend, befestigt ist, und zum anderen aus einer Antriebs-Mutter (14, 15) für jede Gewindespindel (10, 11), die jeweils in einem Mutterhalter (12, 13) mechanisch aufgenommen ist, der jeweils an einer Schiene des anderen Schienenpaares (1, 2) fest angebracht ist,
**dadurch gekennzeichnet, daß** die Antriebs-Muttern (14, 15) jeweils in dem zugehörigen Mutterhalter (12, 13) kugelgelenkig gelagert sind, indem die Antriebs-Muttern (14, 15) zumindest im Lagerbereich kugelig ausgebildet sind und jeweils verdrehgesichert in einem Mutterkäfig (16) aufgenommen sind, der jeweils mit einem flachen metallischen Formteil (12c) des Mutterhalters (12), das zur Befestigung an der zugehörigen Schiene (1, 2) dient, verbunden ist.

2. Sitzversteller nach Anspruch 1, **dadurch gekennzeichnet, daß** der Mutterkäfig (16) jeweils durch ein Kunststoff gebildet ist, das eine kugelige Ausnehmung zur spielfreien Aufnahme der kugelig ausgebildeten Antriebs-Mutter (14) aufweist.

3. Sitzversteller nach Anspruch 2, **dadurch gekennzeichnet, daß** die Antriebs-Mutter (14) einen Anschlagzapfen (17) und der aus Kunststoff bestehende Mutterkäfig (16) eine zugehörige Anschlagkulisse (18) aufweist, die so ausgebildet ist, daß die Bewegung des Anschlagzapfens (17) auf einen gewünschten Bereich begrenzt ist.

4. Sitzversteller nach Anspruch 2 oder 3, **dadurch gekennzeichnet, daß** die Antriebs-Mutter (14) aus Metall oder Kunststoff hergestellt ist.

5. Sitzversteller nach einem der Ansprüche 2 bis 4, **dadurch gekennzeichnet, daß** das flache metallische Formteil (12c) Fortsätze (12d, 12e) besitzt, mit denen es in dem aus Kunststoff bestehenden Mutterkäfig (16) verankert ist.

6. Sitzversteller nach Anspruch 5, **dadurch gekennzeichnet, daß** der Mutterhalter (12) mit seinem flachen metallischen Formteil (12c), dem aus Kunststoff bestehenden Mutterkäfig (16) und der Antriebs-Mutter (14) ein Spritzgießteil ist.

7. Sitzversteller nach Anspruch 1, **dadurch gekennzeichnet, daß** der Mutterkäfig (16) jeweils durch ein kastenförmiges, metallisches Formteil (16a) gebildet ist, welches mit dem flachen metallischen Formteil (12c) des Mutterhalters (12), das zur Befestigung an der zugehörigen Schiene (1, 2) dient, verbunden ist, und welches jeweils die Antriebs-Mutter (14), die einen ohrmuschelartigen Fortsatz (14b) zur Verdrehsicherung und zum Ausgleich eines Achsenversatzes in Y- und X-Richtung besitzt, und die in zwei kugelige Ausnehmungen aufweisende Pfannen (20, 21), die die flache Außenseite besitzen, eingebettet ist, aufnimmt.

8. Sitzversteller nach Anspruch 7, **dadurch gekennzeichnet, daß** das kastenförmige Formteil (16a) einstückig mit dem flachen Formteil (12c) verbunden ist und durch Aufbiegen eines flachen Blechteiles gebildet ist.

9. Sitzversteller nach Anspruch 7 oder 8, **dadurch gekennzeichnet, daß** die Antriebs-Mutter (14) und die halternden Pfannen (20, 21) jeweils aus Kunststoff bestehen.

10. Sitzversteller nach Anspruch 1, **dadurch gekennzeichnet, daß** der Mutterkäfig (16) aus zwei miteinander befestigten Gehäuseteilen (16b, 16c) besteht, die jeweils eine halbkugelige Ausformung zur Aufnahme der kugeligen Antriebsmutter (14) besitzen, wobei die Antriebs-Mutter (14) einen Fortsatz (17) besitzt, der zur Verdrehsicherung in einer Anschlagkulisse (18) zwischen beiden Gehäuseteilen aufgenommen ist und wobei das eine Gehäuseteil (16c) mit dem flachen metallischen Formteil (12c) des Mutterhalters (12), das zur Befestigung an der zugehörigen Schiene dient, verbunden ist.

11. Sitzversteller nach Anspruch 10, **dadurch gekennzeichnet, daß** beide Gehäuseteile (16b, 16c) aus einem Blechteil gebildet sind, in das jeweils die halbkugelige Ausformung eingedrückt ist, wobei an einem Gehäuseteil (12c) einstückig das flache Formteil (12c) angeformt ist.

12. Sitzversteller nach Anspruch 10 oder 11, **dadurch gekennzeichnet, daß** beide Gehäuseteile durch Nieten (22) miteinander verbunden sind.

13. Sitzversteller nach Anspruch 1, **dadurch gekennzeichnet, daß** der Mutterkäfig (16) aus zwei miteinander verbundenen Kunststoff-Halb-Schalen (23, 24) besteht, die jeweils eine innere halbkugelige Ausnehmung zur Aufnahme der kugeligen Antriebs-Mutter (14) besitzen, wobei die Antriebs-Mutter (14) einen Fortsatz (17) aufweist, der verdrehsicher in einer dazu komplementären Ausnehmung (18) in einer der beiden Halb-Schalen (23) aufgenommen ist, und die jeweils an den Seiten beabstandet angeformte Klemmstege (23a, 24a) zur Befestigung der Halb-Schalen (23, 24) mit der eingebetteten Antriebs-Mutter (14) in einer U-förmigen Aufnahme (26) besitzen, wobei die Aufnahme (26) mit dem flachen metallischen Formteil (12c), das zur Befestigung an der jeweiligen Schiene dient, verbunden ist.

14. Sitzversteller nach Anspruch 13, **dadurch gekennzeichnet, daß** die Klemmstege (23a, 24a) jeweils über angeformte halbrunde Fortsätze (23b, 24b) mit den Seitenwänden der Halb-Schalen (23, 24) verbunden sind und in den Schenkeln der Aufnahme (26) dazu komplementäre Ausnehmungen (26a) vorgesehen sind, wobei der Durchmesser der Ausnehmung (26a) in der Aufnahme zur Vorgabe eines ein Versatz ausgleichendes Spiel etwas größer als der Durchmesser der halbrunden Fortsätze (23b, 24b) ist.

## Claims

1. Electric seat adjuster for horizontal adjustment of an automobile seat which can be retained so as to be movable by means of a first pair of rails (3, 4), which are fixed thereon and disposed parallel to one another, on a second pair of rails (1, 2), which are fixed on the vehicle and disposed parallel to one another, with a drive arrangement consisting on the one hand of an electric motor (5) with two drive shafts (6, 7) which are mounted opposite one another and perpendicular to the direction in which the rails extend and on each of which is mounted a bevel gear (8, 9) with a threaded spindle (10, 11) extending parallel to the direction in which the rails extend, the electric motor/gear arrangement being fixed on the first pair of rails (3, 4) and bridging it, and on the other hand consisting of a driving nut (14, 15) for each threaded spindle (10, 11) which is mechanically received in a respective nut holder (12, 13) which is mounted fixed on a respective rail of the other pair of rails (1, 2), **characterised in that** the drive nuts (14, 15) are each mounted by means of a ball joint in the appertaining nut holder (12, 13), the drive nuts (14, 15) being of spherical construction at least in the bearing region and received in each case so as to be secured against torsion in a nut cage (16) which is connected to a respective flat metal shaped part (12c) of the nut holder (12) which serves for fixing on the appertaining rail (1, 2).

2. Seat adjuster as claimed in Claim 1, **characterised in that** the nut cage (16) is formed in each case from a plastics material which has a spherical recess to receive the spherically constructed drive nut (14) without play.

3. Seat adjuster as claimed in Claim 2, **characterised in that** the drive nut (14) has a stop lug (17) and the nut cage (16) made from plastics material has an appertaining stop slide (18) which is constructed in such a way that the movement of the stop lug (17) is limited to a desired region.

4. Seat adjuster as claimed in Claim 2 or 3, **characterised in that** the drive nut (14) is made from metal or plastics material.

5. Seat adjuster as claimed in one of Claims 2 to 4, **characterised in that** the flat metal shaped part (12c) has projections (12d, 12e) with which it is anchored in the nut cage (16) made from plastics material.

6. Seat adjuster as claimed in Claim 5, **characterised in that** the nut holder (12) with its flat metal shaped part (12c), the nut cage (16) made from plastics material and the drive nut (14) is an injection-moulded part.

7. Seat adjuster as claimed in Claim 1, **characterised in that** the nut cage (16) is formed in each case by a box-shaped metal shaped part (16a) which is connected to the flat metal shaped part (12c) of the nut holder (12) serving for fixing on the appertaining rail (1, 2), and which receives in each case the drive nut (14), which has an ear-shaped projection (14b) for securing against torsion and for compensating for an axial offset in the Y and X direction and is embedded in two seats (20, 21) which have spherical recesses and have a flat outer face.

8. Seat adjuster as claimed in Claim 7, **characterised in that** the box-shaped part (16a) is joined integrally to the flat shaped part (12c) and is formed by bending up of a flat sheet metal part.

9. Seat adjuster as claimed in Claim 7 or 8, **characterised in that** the drive nut (14) and the retaining seats (20, 21) are each made from plastics material.

10. Seat adjuster as claimed in Claim 1, **characterised in that** the nut cage (16) consists of two housing parts (16b, 16c) which are fixed to one another and each have a hemispherical shape to receive the spherical drive nut (14), the drive nut (14) having a projection (17) which for securing against torsion is received in a stop slide (18) between the two housing parts, wherein one housing part (16c) is connected to the flat metal shaped part (12c) of the nut holder (12) which serves for fixing on the appertaining rail.

11. Seat adjuster as claimed in Claim 10, **characterised in that** both housing parts (16b, 16c) are formed from a sheet metal part into each of which the hemispherical shape is impressed, the flat shaped part (12c) being integrally formed on one housing part (12c).

12. Seat adjuster as claimed in Claim 10 or 11, **characterised in that** both housing parts are connected to one another by rivets (22).

13. Seat adjuster as claimed in Claim 1, **characterised in that** the nut cage (16) consists of two half-shells (23, 24) which are made from plastics material and are connected to one another and each have an inner hemispherical recess to receive the spherical drive nut (14), the drive nut (14) having a projection (17) which is received so as to be secured against torsion in a complementary recess (18) in one of the two half-shells (23), wherein the half-shells each have integrally formed clamping members (23a, 24a) spaced on the sides for fixing the half-shells (23, 24) with the embedded drive nut (14) in a U-shaped receptacle (26), the receptacle (26) being connected to the flat metal shaped part (12c) which serves for fixing on the respective rail.

14. Seat adjuster as claimed in Claim 13, **characterised in that** the clamping members (23a, 24a) are each connected by way of integrally formed half-round projections (23b, 24b) to the side walls of the half-shells (23, 24) and recesses (26a) which are complementary thereto are formed in the arms of the receptacle (26), the diameter of the recess (26a) in the receptacle being somewhat greater than the diameter of the half-round projections (23b, 24b) to predetermine a play which compensates for an offset.

## Revendications

1. Système de réglage électrique d'un siège, destiné au réglage horizontal du siège d'un véhicule automobile, lequel peut être fixé de manière mobile, par l'intermédiaire d'une première paire de rails (3,4) qui sont fixés en parallèle l'un par rapport à l'autre sur ledit siège sur une seconde paire de rails (1, 2), parallèlement montés l'un par rapport à l'autre de manière fixe sur le véhicule, avec une configuration d'entraînement, constituée d'un moteur électrique (5) avec deux arbres primaires disposés à l'opposée, perpendiculairement au tracé des rails (6, 7) sur chacun desquels est monté un engrenage conique (8, 9) avec un axe fileté (10, 11) qui s'étend parallèlement au tracé des rails, la configuration monteur électrique/engrenage étant fixée sur la première paire de rails (3, 4) en la chevauchant et par ailleurs avec un écrou d'entraînement (14, 15) pour chaque axe fileté (10, 11), chacun étant mécaniquement réceptionné dans un porte-écrou (12, 13), dont chacun est monté de manière fixe sur un rail de l'autre paire de rails (1, 2),
**caractérisé en ce que**
chacun des écrous d'entraînement (14, 15)) est logé à la manière d'une rotule dans le porte-écrou correspondant (12, 13), **en ce que** les écrous d'entraînement (14, 5) sont conçus de façon sphérique au moins dans la zone de logement et **en ce qu'**il sont réceptionnés avec une sécurité anti-torsion dans une cage-écrou (6), dont chacune est reliée à une pièce moulée métallique plate (12c) du porte-écrou (12), qui est destiné à la fixation sur le rail correspondant (1, 2).

2. Système de réglage d'un siège selon la revendication 1,
**caractérisé en ce que**
chaque cage à écrou (16) est constituée en matière plastique présentant un creux destiné à loger l'écrou d'entraînement (14) conçu de façon sphérique.

3. Système de réglage d'un siège selon la revendication 2,
**caractérisé en ce que**
l'écrou d'entraînement (14) est muni d'un tenon de butée (17) et **en ce que** la cage-écrou (16) conçue en matière plastique est munie d'une coulisse de butée (18), laquelle est conçue de façon à ce que le déplacement du tenon de butée (17) soit limité sur une certaine zone.

4. Système de réglage d'un siège selon l'une quelconque des revendications 2 ou 3,
**caractérisé en ce que**
l'écrou d'entraînement (14) est fabriqué en métal ou en matière plastique.

5. Système de réglage d'un siège selon l'une quelconque des revendications 2 à 4,
**caractérisé en ce que** la pièce moulée métallique plate (12c) possède des prolongements (12d, 12^{e}), par l'intermédiaire desquels elle est ancrée dans la cage-écrou (16) constituée en matière plastique.

6. Système de réglage d'un siège selon la revendication 5,
**caractérisé en ce que**
le porte-écrou (12), avec sa pièce moulée métallique plate (12c), avec la cage-écrou (16) constituée en matière plastique et avec l'écrou d'entraînement (14) est une pièce moulée par injection.

7. Système de réglage d'un siège selon la revendication 1,
**caractérisé en ce que**
chaque cage-écrou (16) est constituée d'une pièce moulée métallique en forme de caisson (16a), laquelle est reliée à la pièce moulée métallique plate (12c) du porte-écrou (12) qui est destinée à fixer le rail correspondant (1, 2) et qui sert à loger l'écrou d'entraînement (14) respectif, lequel est muni d'un prolongement (14) du type d'un pavillon d'oreille pour assurer la sécurité anti-torsion et pour compenser un déplacement de l'axe en direction Y et X et incorporé dans des poches (20, 21), présentant deux creux sphériques dont la face externe est plate.

8. Système de réglage d'un siège selon la revendication 7,
**caractérisé en ce que**
la pièce moulée en forme de caisson (16a) est reliée en monobloc avec la pièce moulée plate (12c) et **en ce qu'**elle est conçue par relèvement d'une pièce en tôle plate.

9. Système de réglage d'un siège selon l'une quelconque des revendications 7 ou 8, **caractérisé en ce que**
l'écrou d'entraînement (14) et la poche de fixation (20, 21) sont respectivement constitués en matière plastique.

10. Système de réglage d'un siège selon la revendication 1,
**caractérisé en ce que** la cage-écrou (16) est constituée de deux pièces de boîtier (16b, 16c) fixées entre elles, présentant respectivement un moulage semi-sphérique destiné à loger l'écrou d'entraînement sphérique (14), l'écrou d'entraînement (14) étant muni d'un prolongement (17), qui pour éviter la torsion est logé dans une coulisse de butée (18) entre-les deux pièces de boîtier et la pièce de boîtier (16c) étant reliée à la pièce moulée métallique (12c) du porte-écrou (12), destiné à la fixation sur le rail correspondant.

11. Système de réglage d'un siège selon la revendication 10,
**caractérisé en ce que**
les deux pièces de boîtier (16b, 16c) sont constituées d'une pièce en tôle, dans chacune desquelles le formage semi-sphérique est ménagé, la pièce moulée plate (12c) étant formée par moulage en monobloc sur une pièce du boîtier 12c).

12. Système de réglage d'un siège selon l'une quelconque des revendications 10 ou 11,
**caractérisé en ce que** les deux pièces du boîtier sont reliées entre elles par des rivets (22).

13. Système de réglage d'un siège selon la revendication 1,
**caractérisé en ce que**
la cage à écrou (16) est constituée de deux demi-coques en matière plastique (23, 24), qui sont reliées entre elles, qui sont munies chacune d'un creux interne semi-sphérique destiné au logement de l'écrou d'entraînement sphérique (14), l'écrou d'entraînement (14) présentant un prolongement (17), lequel est réceptionné de façon à résister à la torsion dans un creux ménagé dans l'une des deux demi-coques (18) et qui lui est complémentaire et qui sont respectivement munies de barrettes de serrages (23a, 24a) moulées par formage à une certaine distance sur les côtés et destinées à fixer les demi-coques (23, 24) avec les écrous d'entraînement (14) incorporés dans un logement en forme de U (26), le logement (26) étant relié avec la pièce métallique moulée (12c), destiné à la fixation sur le rail respectif.

14. Système de réglage d'un siège selon la revendication 13,
**caractérisé en ce que**
les barrettes de serrage (23a, 24a) sont respectivement reliées avec les parois latérales des demi-coques (23, 24) par l'intermédiaire de prolongements moulés semi-sphériques (23b, 24b) et **en ce que** des creux qui leur sont complémentaires (26a) sont prévus dans les branches du logement (26), le diamètre du creux (26a) ménagé dans le logement étant légèrement supérieur au diamètre des prolongements semi-sphériques (23b, 24b), pour prédéfinir un jeu destiné à compenser un déport.
